## Europäisches Patentamt

## European Patent Office

## Office européen des brevets

(11) Publication number: **0 184 405**
**B1**

(12) **EUROPEAN PATENT SPECIFICATION**

(45) Date of publication of patent specification: **30.05.90**

(21) Application number: **85308737.7**

(22) Date of filing: **02.12.85**

(51) Int. Cl.⁵: **C 21 B 13/14, C 22 B 5/10, C 10 B 7/10**

(54) Processes and apparatus for the smelting reduction of ores.

(30) Priority: **03.12.84 CA 469222**

(43) Date of publication of application:
**11.06.86 Bulletin 86/24**

(45) Publication of the grant of the patent:
**30.05.90 Bulletin 90/22**

(84) Designated Contracting States:
**BE DE FR GB IT LU SE**

(56) References cited:
**DE-A-2 153 717**
**DE-C- 381 007**
**DE-C- 387 576**
**FR-A- 972 449**
**US-A-1 459 187**
**US-A-2 413 434**
**US-A-2 603 561**
**US-A-2 973 306**
**US-A-4 123 332**
**US-A-4 217 175**

(73) Proprietor: **Canadian Patents & Development Ltd.**
**275 Slater Street**
**Ottawa Ontario, K1P 5H9 (CA)**

(72) Inventor: **Lu, Wei-Kao**
**420 Mountaincrest Avenue**
**Hamilton Ontario L9C 1L8 (CA)**
Inventor: **Bryk, Czeslaw**
**1001 Main Street West**
**Hamilton Ontario L8S 1A9 (CA)**

(74) Representative: **McCallum, William Potter et al**
**Cruikshank & Fairweather 19 Royal Exchange Square**
**Glasgow G1 3AE Scotland (GB)**

Courier Press, Leamington Spa, England.

# EP 0 184 405 B1

**Description**

This invention is concerned with a process for the smelting reduction of ores using heat and reducing material that is mixed with the ore, and especially but not exclusively, to a process for the smelting reduction of iron ores using heat and carbonaceous reducing material. The smelting reduction of low grade silicate nickel ore by the process has been successfully carried out.

Processes for the direct reduction of ores have been known from ancient times and are now usually defined as any process in which metal is produced by reduction from a corresponding ore without using a blast furnace. Smelting reduction means that the metal produced passes through the liquid state. The most important commercial direct reduction processes which produce sponge iron are for the production of metallic iron from iron oxide using any one or more of natural gas, coke-oven gas or coal as the reducing agent. Current interest in non-blast furnace reduction processes has been based upon the potentially lower capital investment and more flexible operating conditions, because of the fact that sinter plants, coke oven plants, blast furnaces and pelletization plants are all expensive to build and to operate. A smelting reduction plant using fine ore (direct from the concentrator without agglomeration) and powder coal can replace all four major equipment components in the conventional process to provide liquid iron from ore and coal.

A comprehensive review of direct reduction processes and apparatus, including smelting reduction processes and the apparatus required, has been given in a report by Davis et al entitled "Direct-Reduction Technology and Economics" published in "Ironmaking and Steelmaking 1982", Vol. 9, No. 3, pages 93 to 129.

We are aware of one commercial process for smelting reduction at the present time, i.e. electric arc furnace reduction operation by Quebec Iron and Titanium Corp. in the Province of Quebec, Canada.

We are also aware of two processes which have been developed to pilot plant scale and subsequently abandoned. A Swedish process entitled DORED and similar to the KALDO steelmaking process failed because of excessive lining wear due to the use of iron oxide rich slags. An Italian development entitled ROTORED, used a cylindrical reactor which rotated in an upright position, the centrifugal force pushing the metal produced upwards along the lining to prevent the corrosive slags from contacting the lining. However, the same force also hinders the mixing which makes this process not commercially viable.

Three processes named respectively ELRED, INRED and PLASMASMELT are now being developed in Sweden and are reviewed in the article quoted above.

We are also aware of U.S. Patent No. 2603561 (Swann) which describes a method and apparatus for reducing oxides of ore in a rotary kiln arrangement having a perforated screw conveyor which is charged with ore, carbon and a flux, the charge being brought into intimate contact with CO gas in a closed chamber at reduction temperatures, excess CO gas produced being passed in a countercurrent into intimate contact with the charge in order to preheat and partially reduce the ore.

It is the principal object of the present invention to provide new processes for the smelting reduction of ores.

Such new processes may be used for the smelting reduction of iron ores to metallic iron and of silicate nickel ores to nickel or iron-nickel alloys.

In accordance with the present invention there is provided a new process for the direct smelting reduction of a metal from a smeltable material, by the use of heat and solid reducing material, the process including the steps of:

a) mixing finely divided smeltable material to be reduced and finely divided solid reducing material in the proportions required for a charge thereof;

b) moving the charge of mixed finely divided material through a tubular reactor vessel by means of a screw-type conveyor within the vessel;

c) heating the charge within the reactor vessel to effect direct reduction of smeltable material to metal to achieve metallization thereof; and

d) melting the charge produced in the reaction vessel and completing the reduction reaction in a pool of liquid metal and slag;

characterised in that the charge is a smeltable material of average particle size with at least 95% less than 600 micrometers, and solid reducing material of average particle size with 80% less than 600 micrometers, that the charge is heated at a temperature in the range about 1,100°C to about 1,300°C below and sufficiently close to the melting temperature and remains in the reactor vessel for a period of time such as to achieve the required metallisation, and that the screw-type conveyor is at least partly buried in the finely divided charge during the residence of the charge in the reactor vessel, so that the charge is both agitated and moved by the conveyor, and so that the conveyor is protected against the effect of elevated temperature applied to the charge by the cooling effects of the endothermic reduction reaction of the charge and of the gases evolved during the reaction.

A partially metallized charge leaving the reactor vessel drops into a liquid pool, wherein melting and reduction of the residue oxides take place.

It will be understood that the words ores and smeltable material are used to encompass materials which are metal-bearing and are capable of being charged to a smelting reduction furnace for the reduction to metal.

2

The process may preferably be carried out in a reactor vessel which is an elongated tubular container having a longitudinal axis and the mechanical member is a screw conveyor having a longitudinal axis which is embedded in the charge with its longitudinal axis parallel to that of the vessel, the screw conveyor being rotated about its longitudinal axis to move and mix the charge.

Preferably also, multiple screw conveyors are provided to convey multiple charges to said reaction vessel interior.

A process in accordance with the invention will now be described, by way of example, with reference to the accompanying schematic drawings wherein:

Fig. 1 is a diagrammatic representation of apparatus used;

Fig. 2 is a horizontal section taken on line 2—2 of Fig. 1;

Fig. 3 is a graph showing the variation of metallisation of a charge with horizontal feed screw speed;

Fig. 4 is a graph showing residual carbon content in the reduced material with horizontal feed screw speed;

Fig. 5 shows diagrammatically the physical form taken by the reduced material from a reaction vessel before it is discharged into the melting furnace; and

Fig. 6 is a graph showing the change in the composition of the output gases with screw feed speed.

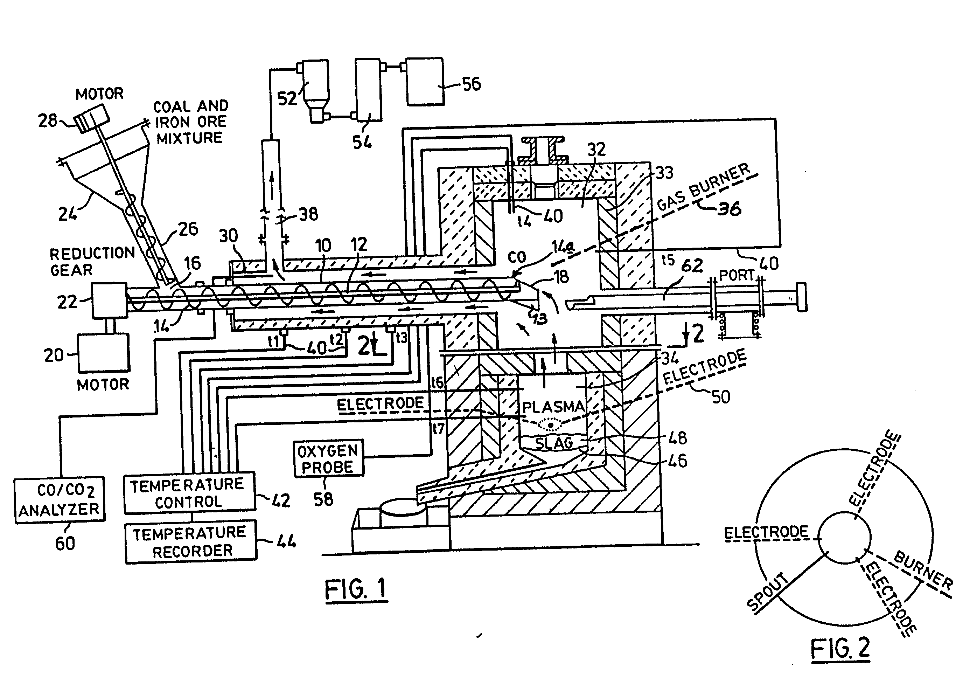

Referring now to Fig. 1 of the drawings apparatus for effecting smelting reduction of iron ore consists of an elongated tubular reactor vessel 10 of uniform circular cross-section along its length, the vessel having a longitudinal axis 12. The upper half of the tube 10 at the discharging end 14a is removed to improve the direct transfer of heat to resulting sponge. A support 13 is located beneath the tube to prevent premature break-off of the sponge by gravity. An elongated metal screw conveyor 14 of external diameter only slightly smaller than the internal diameter of the tubular vessel is mounted in the interiior of the tubular reactor and extends from an inlet 16 thereto to the other open end which constitutes outlet 18 therefrom. The conveyor is rotated about its respective longitudinal axis parallel to the axis 12 by a motor 20 through the usual intermediate mechanism 22 which need not be described in detail.

A pre-mixed mixture of finely divided materials constituting the furnace charge is stored in a hopper 24 from whence it is fed at a controlled rate and bulk density to the vessel interior by a conveyor screw 26 driven by a motor 28. The tube forming the vessel 10 is made of a refractory material able to withstand the temperatures and mechanical abrasion to which it is subjected in operation while having a sufficiently high heat transmission efficiency. A successful laboratory apparatus has used a tube of Mullite (Trade Mark) a low alloy steel while silicon carbide tubes are also suitable. Larger commercial apparatus will use a combination of these materials. At least the major part of the reactor vessel 10 toward the outlet 18 is placed inside an externally insulated preheating tube 30. The mixture of ore and coal is heated through the wall of the tube 10 by the outgoing gases produced by the process and by direct heating of the sponge by radiation and by convection at the outlet 18. Oxidation of part of the residual carbon in the sponge also generates some additional heat. The materials exiting from the outlet 18 discharge into a top chamber 32 of a furnace 33 from which they pass by gravity to a bottom chamber 34.

The reduction of metal oxides and pyrolysis of coal are both strong endothermic reactions. The heat required may be generated by the partial combustion of fuels, but natural gas is used in this embodiment for convenience, introduced by a gas burner indicated by broken line 36. In commercial operation coal is preferred for economy reasons. The fuel and air (or oxygen enriched air) are introduced, after mixing, into the top chamber 32 and result in combustion. The flame from the burner 36 also reacts with volatile matters which come out of outlet 18 to result in a more protective atmosphere for the sponge or coke. All or part of the gaseous products pass around reaction tube 10 as a heat source and leave the system at outlet 38. Thermocouples 40 are provided at intervals along the tube 10 to determine the temperature of the exterior wall and to control the supply of heat via a controller 42, a recorder 44 also being provided. Temperature measuring probes 40 are also provided in the chamber 32.

The resulting reduced spongy metallic iron passes immediately into the lower chamber 34 of the furnace in which the iron and slag are melted quickly under reducing atmospheric conditions to form a metal pool 46 and superposed molten slag layer 48, which are tapped off as necessary. The source of heat for this melting operation can be by any conventional means, such as an arc struck between electrodes, electric induction, or by air- or oxygen-fed gas, oil or powder coal burners, the electrodes or burners being indicated by broken lines at 50. The gaseous products that are generated within the reaction vessel 10 are partially burned in the top chamber 32 and around the reaction tube 10, while being drawn off continuously via outlet 38 and treated by any of the usual processes, illustrated herein by way of example as a dust separator 52, scrubbing tower 54 and storage gasometer 56. An oxygen probe 58 and $CO/CO_2$ analyser 60 are provided for determination of the corresponding process parameters. A sampling and additive delivery device 62 is provided extending into the interior of furnace chamber 32.

In an alternative embodiment which is not specifically illustrated the mixture of spongy iron and slag from the outlet 18 is passed into a cooling unit in which it is cooled under reducing atmospheric conditions as quickly as possible to minimize the possibility of re-oxidation. The reduced mixture can be used in the similar ways as with all other direct reduction products.

There is an adequate supply of iron ores in North America available in very finely divided form because of the beneficiation processes from low grade ore bodies which are employed in almost all mines. The finely divided form is a disadvantage in using such ores in conventional, (direct reduction or blast furnace)

EP 0 184 405 B1

processes because agglomeration, usually by sintering or pelletization, is necessary. In this invention iron ore concentrates may be used without further treatment and result in significant economic benefits.

The range of particle size preferred for the ore in the processes of the invention is that it should be fine enough that 95% is less than 600 micrometers. The processes of the invention permit the direct use of the commercial concentrates, perhaps directly at the mine site, or alternatively by transporting and handling the material in finely divided form. The solid reducing material employed is finely powdered coal and the particular coals employed at the present time are characterised as high in volatiles and of high fluidity, which are the typical characteristics for coking coals. The reactivity of the coal and its volatile content increase together, but a high volatile content or coking property is not directly necessary in the practice of the invention. However, a high volatile coal has higher shrinkage during the reaction and this assists the escape of the resultant gases from the reacting material and their free flow from the reactor vessel. The ash content of the coal is not particularly important, although of course the lowest economically available ash content is preferred.

The coal must also be ground to finely divided state to have close and extensive contact with ore particles; in this particular embodiment the preferred size is 80% less than 600 micrometers. Care must of course be exercised in the handling of such finely divided, highly combustible material because of the possibility of rapid combustion, or even explosion. For reasons of safety the powdered coal may be stored wet, or if dry then under an inert atmosphere. Either type of coal may be mixed with a preheated ore up to about 400—500°C in a non-oxidising atmosphere using the combustible output gas from the reactor as the source of heat, to result in a pre-heated, pre-mixed reactor charge at a temperature of about 300°C.

The following Table 1 shows the results of a series of experiments using powdered coal of different average particle size. The mixtures employed consisted of 82% by weight iron ore concentrate (Adams mine) and 18% by weight Devco coal. The furnace was operated at a temperature of 1200°C and at a horizontal conveyor speed of 1.5 r.p.m. to give a reaction time of about 2 minutes and a vertical feed conveyor speed of 1.0 r.p.m.

TABLE 1
The effect of particle size on coal

| Exp. # | Particle size µm | Fe total $(Fe_T)$% | Fe metallic $(Fe_M)$% | $Fe_m/Fe_T$ ×100 | FeO % | C % |
|---|---|---|---|---|---|---|
| A | 75 | 80.50 | 78.79 | 97.81 | 2.26 | 4.76 |
|   | 75 | 79.69 | 76.65 | 95.24 | 3.62 | 4.12 |
| B | 75—150 | 80.50 | 76.74 | 95.33 | 4.84 | 4.98 |
|   | 75—150 | 80.70 | 75.95 | 94.11 | 4.75 | 5.10 |
| C | 300—600 | 78.60 | 63.66 | 80.99 | 19.23 | 5.75 |
|   | 300—600 | 79.12 | 62.90 | 79.50 | 20.88 | 5.97 |
| D | 600—1400 | 78.13 | 60.72 | 77.72 | 22.38 | 6.45 |
|   | 600—1400 | 77.92 | 59.51 | 76.37 | 23.67 | 6.59 |

As is to be expected maximum metallisation is obtained with the smallest particle sizes less or equal to 75 micrometers; substantially the same degree of metallisation is obtained with particle sizes between 75 and 150 micrometers. An appreciable drop from about 95% to about 80% is obtained with particles in the range 300—600 micrometers, and another smaller drop to about 77% with particles in the range 600—1400 micrometers. Metallisation can be increased by longer reaction times requiring larger apparatus, or giving smaller throughput, and these disadvantages must be balanced against the additional grinding costs involved as the average particle size is decreased. It is for this reason that an ore particle size of 95% less than 600 micrometers is preferred for a commercial operation. It was also found with the larger size particles (above 600 micrometers) that difficulty developed in moving material through the reaction zone caused, it is believed, by segregation of the particles under the agitation to which they are subjected by the conveyor screw; such segregation is reduced or avoided if both components are of comparable particle size.

The preferred particle size of coals for the process of the invention are

| Non-coking coal | 95% less than 600 micrometers |
| Coking coal | 80% less than 600 micrometers |

Another important parameter of the processes of the invention is the ratio of the ore to be reduced to the amount of solid reductant. It is found in practice that the minimum amount of a high volatile coal should be about 18% by weight; for iron ore concentrate of 68% iron, this amount gives the required metallisation

4

and also gives sufficient carbon in the metal pool in the furnace 33. This carbon is necessary therefore both to reduce the melting point of the metallic iron and also to protect the iron while in the spongy state against re-oxidation. Increasing the amount of coal from about 18—20% up to about 30% by weight does not substantially increase the amount of metallisation, but does increase the amount of carbon in the metal. The presence of a surplus of carbon above stoichiometric has a beneficial effect upon the gases produced in the process, in that the percentages of carbon monoxide and hydrogen are increased, making it more suitable as a chemical feed stock or clean fuel for subsequent processes.

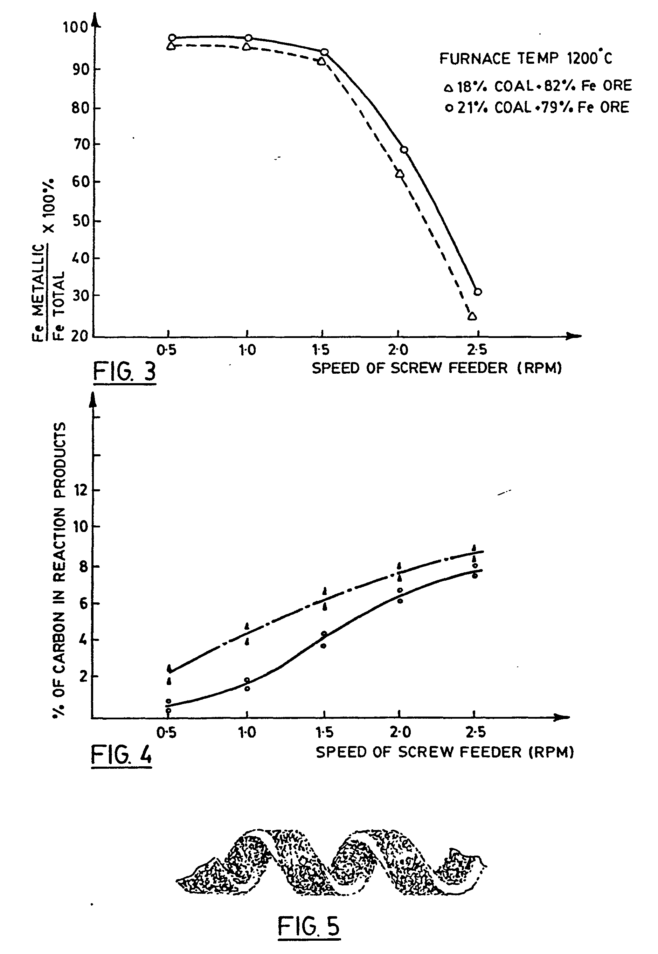

Fig. 3 shows *inter alia* the degree of metallisation obtained with two different mixtures of average particle size less than 75 micrometers treated with different residence times (increased conveyor speeds) in the reactor vessel at a temperature of about 1200°C. The solid line was obtained for a mixture of 21% by weight coal and 79% iron ore, while the broken line is for a mixture of 18% coal and 82% ore; the decrease in metallisation with the smaller proportion of coal is quite small and remains substantially constant. Fig. 4 shows that decreased residence time (increased conveyor speed) results in substantial increase in carbon content in the resultant reduced product, although again the difference between the two mixtures is substantially constant for different residence times. The mixture with the smaller amount of coal results in the smaller percentage of carbon in the reduced product.

It is preferable to employ a process which results in the minimum amount of slag, since this eases the handling problems and increases the output of the apparatus. It is an advantageous property of the processes that there is a high proportion of sulphur in the slags, with consequent reduction in the metal and in the output gases. Sufficient slag must be available to dissolve the sulphur for this beneficial effect to be obtained, and it may therefore, with some processes, be necessary to add slag-forming materials such as lime or limestone. Up to 5% by weight of lime may be added, or the equivalent weight of limestone (up to 7%).

All of the charge must reach a minimum temperature of about 1100°C if reduction is to take place in the case for iron ore and nickel ore reduction. Increase of temperature will decrease the necessary reaction time for adequate metallisation and the upper limit is about 1350°C if any substantial melting is not to take place in the vessel 10, and render the process inoperable. The preferred range of process temperature in the charge is from about 1150°C to about 1300°C. The lower chamber 34 will of course operate at a higher temperature and the inner wall of the reaction vessel 10 will also be at a higher value. In this embodiment the screw conveyor 14 is of steel (with or without ceramic tip) and is therefore a heat sink by conduction along its length. As mentioned above, the reaction is quite highly endothermic and the heat flux must be sufficient to maintain the reaction temperature despite the resultant heat loss. There is also a substantial loss of heat to the by-product gases which contact the higher temperature walls of the vessel as they leave; in commercial processes as much as possible of this heat will be recovered by heat exchange in the cooling of the gases.

The constant consumption of heat by the furnace charge and heat transfer to the reaction site will result in a temperature gradient across the reacting mixture. The conveyor screw is shielded or protected to a certain extent against the deleterious effect of the high process temperature by the surrounding evolving by-product gases; the protection provided by these gases is facilitated by the fact that they are inherently reducing in nature. The remaining reacting mixture is also the most effective coolant for the conveyor screw in view of its continued intimate contact therewith. It is of course necessary to make the screw conveyor of materials that retain as much strength as possible at the high temperatures of operation, but there will be the usual compromises between initial and maintenance costs which will dictate whether it is possible to use more resistant, yet costly materials for the conveyor.

The charge of material entering the reactor vessel may be pre-heated as described above and will require some time to reach an effective reaction temperature, increasing the required residence time in the tube. The discharge end of the reaction tube is partially cut open at 14a as described above, to increase the heat transfer rate and to decrease the residence time. Table 2 below shows the effect of furnace temperature on the metallisation of a mixture of 79% by weight iron ore and 21% by weight Devco coal of average particle size less than about 75 micrometers fed through the reaction vessel with a conveyor speed of 1.5 r.p.m. It will be seen that there is an abrupt increase in the degree of metallisation from 1150°C to 1200°C and a smaller increase to 1250°C. The table shows that 1200°C is adequate but higher temperatures would be more satisfactory for improved and faster chemical reaction and reaction of larger particles, provided that the reaction vessel and the conveyor screw can withstand the increased temperature.

TABLE 2
The effect of furnace temperature

| Exp. # | Furnace temp. °C | $Fe_T$ % | $Fe_M$ % | $Fe_M/Fe_T$ ×100 | FeO % | $Fe_3O_4$ % | C % |
|---|---|---|---|---|---|---|---|
| E | 1050 | 60.45 | — | — | 37.12 | 43.59 | 11.91 |
|   | 1050 | 61.20 | — | — | 40.50 | 43.51 | 11.49 |
| F | 1100 | 63.20 | 10.11 | 15.99 | 44.10 | 25.95 | 9.35 |
|   | 1100 | 62.55 | 9.13 | 14.59 | 46.06 | 24.41 | 8.86 |
| G | 1150 | 69.40 | 32.85 | 47.33 | 41.57 | 5.81 | 6.90 |
|   | 1150 | 68.69 | 33.10 | 48.18 | 38.45 | 5.72 | 6.75 |
| H | 1200 | 79.15 | 75.80 | 95.76 | 4.31 | — | 5.91 |
|   | 1200 | 78.90 | 74.60 | 94.55 | 5.52 | — | 5.83 |
| I | 1250 | 83.14 | 82.49 | 99.22 | 0.83 | — | 4.25 |
|   | 1250 | 83.05 | 82.07 | 98.82 | 1.25 | — | 4.67 |

Although natural gas and gases leaving the reaction tube are employed for heating the reaction vessel it will be apparent that other sources of heat can also be used, for example the combustion of some of the powdered coal, oil, etc., with pre-heating of the combustion air by heat exchange with the off gases. The overall fuel consumption is lower, since the chemical reaction of reduction takes place at relatively lower temperatures and results in carbon-rich iron of reduced melting temperature. Although the reaction and melting take place in separate zones they can be regarded as part of the same furnace and a single heat source can be used, such as a plasma arc or the combustion of powdered coal.

The required reaction time is, as described above, dependent upon the temperature of the reaction and the rate at which heat can be supplied to the charge. Assuming that the furnace is operated at a temperature high enough to supply heat at a sufficient rate, then the residence time for the charge within the reaction vessel will be adjusted to the minimum required for adequate metallisation, so as to obtain maximum output from apparatus of given size. The conveyor screw 14 requires to be somewhat smaller in external diameter than the internal diameter of the reaction vessel interior to provide an adequate passageway for the evolving gases which must escape from the vessel without the generation of unsafe pressures. It is also preferred for the longitudinal axis of the conveyor screw to be displaced vertically downwards from the corresponding axis 12 of the tubular vessel, so that the screw is resting on the bottom of the vessel inner wall. The difference in size is not critical and the screw diameter should be in the range 93—97% of the vessel interior diameter. The continuous operation of the screw 14 ensures that any accretions are broken away before they can grow to a size that will cause it to stall. The operation of the apparatus therefor differs fundamentally from that of a kiln or rotary hearth in which there is no positive mechanical means moving the charge through the reaction zone. The chemical reaction is also accompanied by shrinkage of the charge, which occurs progressively along the reaction vessel from the inlet to the outlet, and thus provides additional space for the evolving gases. The conveyor screw must extend at least to the cooler part of the reaction vessel interior beyond the zone at which the temperature is sufficient for an accretion to adhere to the vessel wall; in practice this means that it should extend close to the outlet 18, and not beyond.

The linear velocity of the movement of material through the reaction zone, and the residence time of the material in the reaction zone is determined by the speed of rotation of the conveyor screw 14, which in this embodiment could be varied between 0.66 and 3 r.p.m. The hot zone had a length of 10 cm and these speeds therefore corresponded respectively to residence times of from about 3 minutes down to 40 seconds. The results shown in Tables 1, 2 and 3 were obtained for a vessel of 4.0 cm interior diameter. Longer residence times of 5 to 11.5 minutes were obtained with a larger vessel of 8.75 cm interior diameter, where rotation speeds were varied between 0.33 and 0.75 r.p.m. and where the hot zone had a length of 35 cm. Table 3 below shows the results of a series of experiments J through N with increasing furnace temperature and also with increasing conveyor speeds to give shorter reaction times. The rate with postscript H is for the horizontal conveyor 14, while that with the postscript V is for the feeder conveyor 26. As described above, variations in the speed of the vertical conveyor 26 will result in variations of the bulk density of the charge.

TABLE 3

| Exp. # | Furnace temp. °C | Coal | | Feeding rate rpm | Reaction product, % wt. | | | | |
|---|---|---|---|---|---|---|---|---|---|
| | | Ore | | | $Fe_t$ | $Fe_m$ | FeO | C | S |
| J | 1170 | 21 | | 0.66H | 80.00 | 80.00 | — | 4.81 | 0.32 |
| | | 79 | | 0.66V | 80.50 | 80.50 | — | 4.86 | 0.31- |
| K | 1170 | 21 | | 0.66H | 75.29 | 75.0 | 0.37 | 6.17 | 0.32 |
| | | 79 | | 2.5V | 75.39 | 75.10 | 0.37 | 5.80 | 0.31 |
| L | 1200 | 18 | | 1.0H | 88.0 | 87.50 | 0.64 | 0.82 | 0.29 |
| | | 82 | | 1.0V | 88.4 | 88.00 | 0.51 | 0.92 | 0.29 |
| M | 1200 | 18 | | 1.5H | 80.0 | 80.0 | — | 4.05 | 0.29 |
| | | 82 | | 1.5V | 80.0 | 79.8 | 0.26 | 4.11 | 0.29 |
| N | 1240 | 18* | | 2.0H | 69.50 | 44.10 | 32.70 | 6.28 | 0.30 |
| | | 82 | | 1.5V | 69.92 | 45.55 | 31.30 | 6.17 | 0.30 |

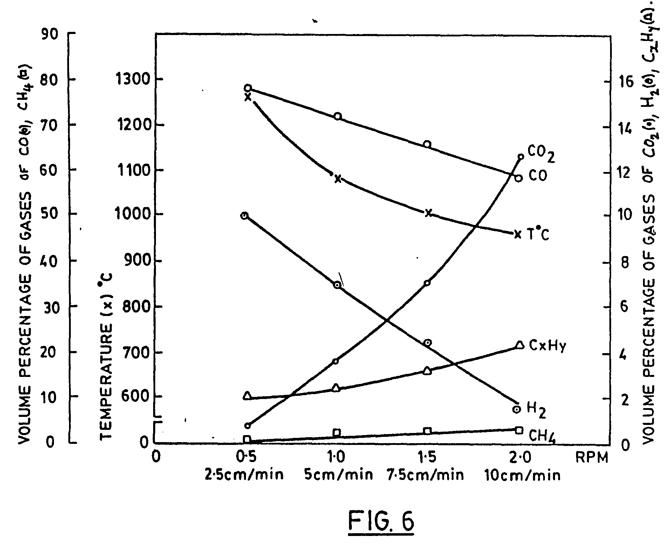

Comparison of the experiments J and K shows that the increased bulk density caused by increasing the rate of the feed conveyor 26 results in lower metallisation. The highest metallisation is shown by experiment L with temperature 1200°C and medium conveyor speeds. The substantial drop with experiment N is explained only partly by the reduced reaction time, since a coarser grind of coal was used. A sketch of the physical form taken by the reduced material from experiment L is shown in Fig. 5 in which it is seen that the sponge is helical. All of the experiments were accompanied by relatively smooth operation of the conveyor. It will also be noted that the nature of the processes of the invention permit effective control of the carbon content of the resultant metal over a wide range, which is important in commercial practice.

It is also possible to control effectively the nature of the output gases; thus, it is desired to extract the maximum heat content from the reducing material, but this will result in greater production of carbon dioxide; on the other hand, it is desired to maintain a reducing atmosphere which requires the presence of carbon monoxide; the processes of the invention permit the necessary balance to the obtained. Thus, Fig. 6 shows the effect of varying conveyor speeds on the chemical composition of the output gases. It will be seen that the lower speeds favour the production of carbon monoxide and hydrogen, while the higher speeds favour the production of carbon dioxide and hydrocarbons, accompanied by a temperature reduction, the choice being therefore also dependent upon the intended end-use of these gases.

Various modifications may be made to the apparatus hereinbefore described, for example, the tube need not be cut away as shown in Fig. 1; however the preferred arrangement increases heat transfer and can increase speed of operation. Also the apparatus illustrated in Fig. 1 is exemplary and in an alternative structure multiple screw feeders are provided to a single chamber which can be heated by burning coal or other heating medium.

**Claims**

1. A process for the direct smelting reduction of a metal from a smeltable material, by the use of heat and solid reducing material, the process including the steps of:

a) mixing finely divided smeltable material to be reduced and finely divided solid reducing material in the proportions required for a charge thereof;

b) moving the charge of mixed finely divided material through a tubular reactor vessel (10) by means of a screw-type conveyor (14) within the vessel (10);

c) heating the charge within the reactor vessel (10) to effect direct reduction of smeltable material to metal to achieve metallization thereof; and

d) melting the charge produced in the reaction vessel (10) and completing the reduction reaction in a pool of liquid metal (46) and slag (48);

characterised in that the charge is a smeltable material of average particle size with at least 95% less than 600 micrometers, and solid reducing material of average particle size with 80% less than 600 micrometers, that the charge is heated at a temperature in the range about 1,100°C to about 1,350°C below and sufficiently close to the melting temperature and remains in the reactor vessel (10) for a period of time such as to achieve the required metallisation, and that the screw-type conveyor (14) is at least partly buried in the finely divided charge during the residence of the charge in the reactor vessel (10), so that the charge is both agitated and moved by the conveyor (14), and so that the conveyor (14) is protected against the effect of elevated temperature applied to the charge by the cooling effects of the endothermic reduction reaction of the charge and of the gases evolved during the reaction.

2. A process as claimed in claim 1, characterised in that the smeltable material to be reduced is an iron ore and the solid reducing material is a coal.

3. A process as claimed in claim 1 or 2, characterised in that the finely divided smeltable material consists of from about 70% to about 82% by weight of the charge.

4. A process as claimed in claim 3, characterised in that the proportion of finely divided smeltable material in the charge is from about 70% to 82% by weight and the proportion of reducing material is respectively from about 30% to 18% by weight.

5. A process as claimed in any one of claims 1 to 4, characterised in that the mixture includes a predetermined amount of finely divided flux-forming material to result in a fluid slag with adequate desulfurization power.

6. A process as claimed in any one of claims 1 to 5, characterised in that the charge remains in the reactor vessel (10) for a period of time in the range from 40 seconds to 11.5 minutes.

7. A process as claimed in any one of claims 1 to 6, characterised in that the charge is heated to a sufficient temperature and remains in the reactor vessel (10) for a period of time such as to achieve at least 48% metallisation.

8. A process as claimed in claim 1, characterised in that the smeltable material to be reduced is a nickel ore and the solid reducing material is a coal.

9. A process as claimed in claim 8, characterised in that the ore is a nickel ore of average particle size in the range from about 75 micrometers to about 1,400 micrometers.

10. A process as claimed in any one of claims 1 to 9, characterised in that the reduced material from the reactor vessel (10) is fed directly to a melting furnace (34) in which the metal and resulting slag are melted for the separation thereof.

11. A process as claimed in any one of claims 1 to 10, characterised in that a plurality of reactor vessels (10) are provided feeding to a single pool of liquid metal and slag.

## Patentansprüche

1. Verfahren zur direkten Schmelzreduktion eines Metalls aus einem schmelzbaren Material unter Hitzebaufschlagung und Verwendung eines festen, reduzierenden Materials in den folgenden Schritten:

a) Mischen von fein verteiltem, zur Reduktion bestimmten schmelzbarem Material mit fein verteiltem festen Reduktionsmaterial in für eine Charge erforderlichen Mengen;

b) Transport der Charge aus gemischtem, fein verteiltem Material durch einen röhrenförmigen Reaktorbehälter (10) mittels einer innerhalb des Behälters (10) befindlichen Schneckenförderanlage (14);

c) Erhitzen der Charge innerhalb des Reaktorbehälters (10) zur direkten Reduktion des schmelzbaren Materials zum Metall zum Zwecke der Metallbildung und

d) Schmelzen der im Reaktorbehälter (10) erhaltenen Charge und Vervollständigung der Reduktionsreaktion in einem Bad mit flüssigem Metall (46) und Schlacke (48),

dadurch gekennzeichnet, daß die Charge aus schmelzbarem Material von durchschnittlicher Teilchengröße mit mindestens 95% kleiner als 600 Mikrometer, und aus festem, reduzierendem Material von durchschnittlicher Teilchengröße mit 80% weniger als 600 Mikrometer besteht, daß die Charge auf eine Temperatur im Bereich von ca. 1000°C bis ca. 1350°C unterhalb und genügend nahe an der Schmelztemperatur erhitzt wird und solange im Reaktorbehälter (10) verbleibt, bis die erwünschte Metallbildung erfolgt ist und daß die Schneckenförderanlage (14) zumindest teilweise in die fein verteilte Charge eintaucht, während diese im Reaktorbehälter (10) verbleibt, so, daß die Charge von der Förderanlage (14) sowohl gerüttelt aus auch transportiert wird und so, daß die Förderanlage (14) vor der Einwirkung der erhöhten Temperatur geschützt wird, mit der die Charge während der Kühlwirkung der endothermen Reduktionsreaktion der Charge mit den während der Reaktion entweichenden Gasen beaufschlagt wird.

2. Verfahren nach Anspruch 1, dadurch gekennzeichnet, daß das reduzierende schmelzbare Material aus Kohle besteht.

3. Verfahren nach Anspruch 1 oder 2, dadurch gekennzeichnet, daß das veinverteilte schmelzbare Material ca. 70 bis ca. 82 Gew.-%, bezogen auf die Charge, ausmacht.

4. Verfahren nach Anspruch 3, dadurch gekennzeichnet, daß der Anteil von feinverteiltem, schmelzbarem Material ca. 70 bis 82 Gew.-% ausmacht und der Anteil von reduzierendem Material entsprechend ca. 18 bis 30 Gew.-%.

5. Verfahren nach jedem der Ansprüche 1—4, dadurch gekennzeichnet, daß die Mischung aus einen vorbestimmten Teil fein verteilten, die Flußeigenschaften fördernden Materials zur Bildung von Flußschlacke mit ausreichender Kapazität für die Entschwefelung besteht.

6. Verfahren nach jedem der Ansprüche 1—5, dadurch gekennzeichnet, daß die Charge über einen Zeitraum von 40 Sekunden bis 11,5 Minuten im Reaktionsbehälter (10) verbleibt.

7. Verfahren nach jedem der Ansprüche 1—6, dadurch gekennzeichnet, daß die Charge auf eine genügend hohe Temperatur erhitzt wird und solange im Reaktorgefäß (10) verbleibt, bis mindestens 48% Metallbildung erreicht sind.

8. Verfahren nach Anspruch 1, dadurch gekennzeichnet, daß das zu reduzierende schmelzbare Material aus Nickelerz und das feste reduzierende Material aus Kohle besteht.

9. Verfahren nach Anspruch 8, dadurch gekennzeichnet, daß das Erz aus einem Nickelerz mit durchschnittlicher Teilchengröße im Bereich von ca. 75 Mikrometer bis ca. 1400 Mikrometer besteht.

10. Verfahren nach jedem der Ansprüche 1—9, dadurch gekennzeichnet, daß das reduzierte Material direkt aus dem Reaktorbehälter (10) einem Schmelzofen (34) zugeführt wird, in welchem das Metall und die anfallende Schlacke zu ihrer Trennung voneinander geschmolzen werden.

11. Verfahren nach jedem der Ansprüche 1—10, dadurch gekennzeichnet, daß mehrere Reaktorbehälter (10) mit Zuführungen zu einem einzigen Bad mit flüssigem Metall und Schlacke vorgesehen sind.

**Revendications**

1. Procédé pour la réduction directe par fusion d'un métal à partir d'un matériau fusible, utilisant de la chaleur et un matériau réducteur solide, le procédé comprenant les étapes de:

a) mélange du matériau fusible finement divisé devant être réduit et du matériau réducteur solide finement divisé selon les proportions requises pour une charge;

b) déplacement de la charge de matériau finement divisé mélangé à travers un réacteur tubulaire (10) au moyen d'un transporteur à vis sans fin (14) à l'intérieur du réacteur (10);

c) chauffage de la charge à l'intérieur du réacteur (10) pour effectuer une réduction directe du matériau fusible en métal afin de réaliser sa métallisation; et

d) fusion de la charge produite dans le réacteur (10) et achèvement de la réaction de réduction dans une masse de métal liquide (46) et de laitier (48);

caractérisé en ce que la charge comprend un matériau fusible ayant une dimension particulaire moyenne telle qu'au moins 95% des particules ont moins de 600 µm et un matériau réducteur solide ayant une dimension particulaire moyenne telle qu'au moins 80% des particules ont moins de 600 µm, que la charge est chauffée à une température dans la gamme d'environ 1100 à 1350°C en-dessous et suffisamment proche du point de fusion et reste dans le réacteur (10) pendant une période de temps suffisante pour achever la métallisation requise, et que le transporteur à vis sans fin (14) est au moins partiellement enfoui dans la charge finement divisée pendant le séjour de la charge dans le réacteur (10), de telle sorte que la charge est à la fois agitée et déplacée par le transporteur (14) et que le transporteur (14) est protégé contre les effets de la forte température appliquée à la charge par les effets de refroidissement exercés par la réaction de réduction endothermique de la charge et les gaz dégagés pendant la réaction.

2. Procédé suivant la revendication 1, caractérisé en ce que le matériau fusible à réduire est un minerai de fer et que le matériau réducteur solide est un charbon.

3. Procédé suivant la revendication 1 ou 2, caractérisé en ce que le matériau fusible finement divisé constitue d'environ 70% à 82% en poids de la charge.

4. Procédé suivant la revendication 3, caractérisé en ce que la proportion de matériau fusible finement divisé dans la charge est d'environ 70% à 83% en poids et que la proportion de matériau réducteur est respectivement d'environ 30% à 18% en poids.

5. Procédé suivant l'une quelconque des revendications 1 à 4, caractérisé en ce que le mélange comprend une quantité prédéterminée de matériau fondant finement divisé pour fournir un laitier fluide avec un pouvoir désulfurant adéquat.

6. Procédé suivant l'une quelconque des revendications 1 à 5, caractérisé en ce que la charge reste dans le réacteur (10) pendant une période de temps dans la gamme de 40 secondes à 11,5 minutes.

7. Procédé suivant l'une quelconque des revendications 1 à 6, caractérisé en ce que la charge est chauffée à une température suffisante et reste dans le réacteur (10) pendant une période de temps convenable pour atteindre une métallisation d'au moins 48%.

8. Procédé suivant la revendication 1, caractérisé en ce que le matériau fusible à réduire est un minerai de nickel et que le matériau réducteur solide est un charbon.

9. Procédé suivant la revendication 8, caractérisé en ce que le minerai est un minerai de nickel ayant une dimension particulaire moyenne dans la gamme d'environ 75 à 1400 µm.

10. Procédé suivant l'une quelconque des revendications 1 à 9, caractérisé en ce que le matériau réduit provenant du réacteur (10) est envoyé directement dans un fourneau de fusion (34) dans lequel le métal et le laitier résultant sont fondus pour leur séparation.

11. Procédé suivant l'une quelconque des revendications 1 à 10, caractérisé en ce que de nombreux réacteurs (10) sont fournis pour alimenter une masse unique de métal liquide et de laitier.

MOTOR
28

COAL AND IRON ORE MIXTURE

52    54    56

MOTOR
28

REDUCTION GEAR

24

26

22    16

14

30    10    12    CO    14a    GAS BURNER 36

t4    40    32    33

18    t5    62    PORT    40

20    13

MOTOR

t1    40    t2    2L    t3    34    ELECTRODE 50

t6

ELECTRODE    PLASMA    ELECTRODE

t7    SLAG    48    46

CO/CO₂ ANALYZER
60

TEMPERATURE CONTROL    42

OXYGEN PROBE    58

TEMPERATURE RECORDER    44

FIG. 1

ELECTRODE    ELECTRODE

ELECTRODE    BURNER

SPOUT    ELECTRODE

FIG. 2

EP 0 184 405 B1

FIG. 3

FURNACE TEMP 1200°C

△ 18% COAL + 82% Fe ORE
○ 21% COAL + 79% Fe ORE

FIG. 4

FIG. 5

FIG. 6